# FASCICULE DE BREVET EUROPEEN

(11) **EP 4 058 677 B1**
(45) Date de publication et mention de la délivrance du brevet: **23.07.2025**
(21) Numéro de dépôt: 20799757.8
(22) Date de dépôt: 05.11.2020
(51) Int. Cl.: F16B 5/02, G04B 19/04, G04B 19/14, G04B 19/20, G04C 17/00, G04B 19/247

(54) **DISPOSITIF DE FIXATION D'UN DISQUE**
ORGAN UND VORRICHTUNG ZUR BEFESTIGUNG EINER SCHEIBE
MEMBER AND DEVICE FOR ATTACHING A DISC

(30) Priorité: 13.11.2019 EP 19208899
(43) Date de publication de la demande: 21.09.2022
(73) Titulaire: ETA SA Manufacture Horlogère Suisse, 2540 Grenchen (CH)
(72) Inventeur: MOUCHE, Laurent, 2714 Les Genevez (CH); LAGORGETTE, Pascal, 2502 Bienne (CH); BALMER, Raphaël, 2824 Vicques (CH)
(74) Mandataire: ICB SA
(86) Numéro de dépôt international: PCT/EP2020/081189
(87) Numéro de publication internationale: WO 2021/094197

(56) Documents cités:
- EP-A1- 1 046 968
- EP-A1- 3 185 084
- EP-A1- 3 764 171
- CH-A2- 706 764
- CN-U- 202 230 308
- GB-A- 1 486 059
- JP-A- 2013 108 904
- JP-A- S54 139 759

## Description

### Domaine technique

Le domaine technique de la présente invention concerne les dispositifs de fixation de disque et en particulier d'un disque de quantième.

### Arrière-plan technologique

Certains éléments d'affichages sont réalisés dans des matériaux précieux avec des tolérances qui sont inhérentes au processus de fabrication, et ils sont fixés sur des mouvements, qui sont réalisés dans d'autres matériaux avec d'autres processus qui possèdent également leurs propres tolérances.

Dès lors, un ajustement est nécessaire afin que les deux pièces puissent être assemblées, ce qui exige beaucoup de précisions est parfois, les pièces qui ne conviennent pas sont mis au rebut.

JP 2013 108904 A dévoile un membre annulaire présentant une ouverture afin de fixer l'élément d'affichage comportant une baïonnette coopérant avec l'ouverture.

CN 202 230 308 U divulgue un anneau sur lequel un disque de quantième est monté.

### Résumé de l'invention

Par conséquent, la présente invention définie par les revendications indépendantes 1 et 5, se propose de résoudre totalement ou partiellement les inconvénients cités ci-avant.

Des modes de réalisation préférés sont définis dans les revendications dépendantes.

La présente invention sera bien comprise et ses avantages ressortiront aussi à la lumière de la description qui va suivre, et faite en référence aux figures annexées, dans lesquelles des signes de références identiques correspondent à des éléments structurellement et/ou fonctionnellement identiques ou similaires.

### Brève description des figures

L'invention sera décrite ci-après de manière plus détaillée à l'aide des dessins annexés, donnés à titre d'exemples nullement limitatifs, dans lesquels :

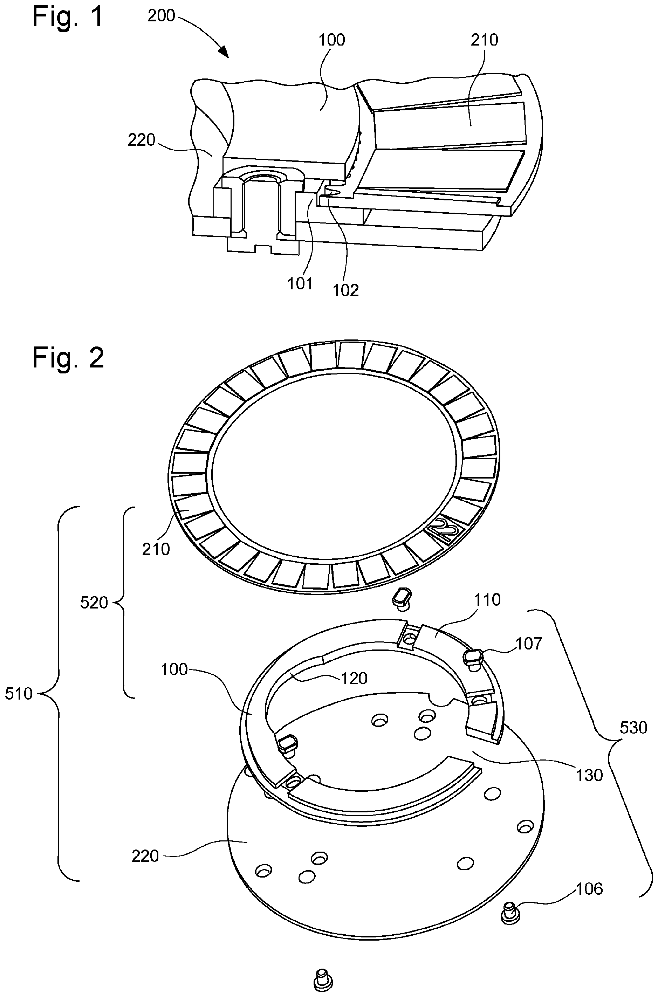

- La figure 1 représente une vue en coupe d'un dispositif de fixation **200** selon un mode de réalisation ; et,
- La figure 2 illustre un procédé de fixation de l'anneau fendu **100** de sorte à former ledit dispositif de fixation **200.**

### Description détaillée de l'invention

Lors de la fabrication de certaines pièces d'horlogerie, certaines tolérances peuvent apparaître et cela est notamment le cas des éléments d'affichage, par exemple les quantièmes du mois ou autres, et des mouvements.

À cet effet, il est prévu au moins un anneau fendu **100,** qui permet d'assembler au moins un élément d'affichage **210** sur au moins un mouvement **220** grâce à un procédé de fixation **500** décrit ci-après.

Pour ce faire, il convient de disposer dudit au moins un élément d'affichage **210,** dudit au moins un mouvement **220** et dudit au moins un anneau fendu **100,** qui ont été fournis **510** au préalable.

Le disque de quantième **210,** c'est-à-dire ledit élément d'affichage **210** est inséré dans ledit au moins un anneau fendu **100** en déformant **520** ledit au moins un anneau fendu **100** de sorte à s'adapter audit au moins un élément d'affichage **210.**

En effet, ledit anneau fendu **100** comprend au moins une portion rigide **110** et au moins une portion de déformation **120,** qui permet à ladite au moins une portion de déformation **120** d'être plus facilement déformable que ladite au moins une portion rigide **110** de sorte à s'adapter au contour dudit au moins un élément d'affichage **210.**

Par ailleurs, ledit au moins un anneau fendu **100** se présente ou présente une forme d'arc de cercle et/ou de clip. Cette forme d'arc de cercle et/ou de clip présente une discontinuité **130** ou une ouverture **130,** ce qui permet en rapprochant les deux extrémités dudit au moins un anneau fendu **100** et donc d'être déformé dans un plan, de préférence coplanaire audit au moins un anneau fendu **100,** puisque cette déformation **520** est localisée au niveau de ladite au moins une portion de déformation **120** dudit au moins un anneau fendu **100.** Ainsi, en rapprochant les deux extrémités de part et d'autre de l'ouverture, ladite au moins une portion de déformation **120** se déforme et ledit au moins un anneau fendu **100** est déformé dans un plan coplanaire de sorte à faciliter l'insertion du cadre d'un part et d'autre part, son installation dans un boitier de montre.

Cela est très avantageuse puisque comme ledit anneau fendu **100** comprend un épaulement **101** ou une gorge **101** qui forme un logement **102** pour recevoir ledit au moins un élément d'affichage **210,** et donc cette déformation dans un plan permet d'insérer ou de loger ledit au moins un élément d'affichage **210** dans ledit anneau fendu **100.**

S'ensuit, la fixation **530** dudit au moins un anneau fendu **100** avec ledit au moins un élément d'affichage **210** audit au moins un mouvement **220** via des vis **106** et le cas échant de pieds de vis **107** afin de former un dispositif de fixation **200** comprenant ledit au moins un élément d'affichage **210,** ledit au moins un mouvement **220** et ledit au moins un anneau fendu **100** de sorte à éliminer les tolérances qui peuvent apparaître lors des procédés de fabrication des pièces, et en particulier d'un élément d'affichage **210** et d'un mouvement **220.**

Il convient de rajouter que ledit au moins un anneau fendu **100** peut être peu précis, plus exactement, le contour dudit au moins un anneau fendu **100** comprenant ledit épaulement **101** ou ladite gorge **101** peut comprendre une plus grande tolérance par rapport au diamètre dudit au moins un élément d'affichage **210.** Cette tolérance est dû grâce à ladite discontinuité **130** ou ladite ouverture **130** dudit au moins un anneau fendu **100** et au tolérances de la matière plastique que compose ledit au moins un anneau fendu **100,** et bien naturellement c'est en fixant ledit au moins un anneau fendu **100** sur ledit au moins un mouvement **220** que ledit dispositif de fixation **200** est formé et que l'ensemble comprenant ledit au moins un anneau fendu **100** et ledit au moins un élément d'affichage **210** devient plus précis.

## Revendications

1. Ensemble comprenant un élément d'affichage (210) et un anneau fendu (100) pour fixer l'élément d'affichage (210) d'une montre, configuré pour afficher au moins une information, sur au moins un mouvement (220) d'une montre, ledit anneau fendu (100) présentant une forme de C définissant une forme en arc de cercle et/ou de clip avec une discontinuité ou une ouverture (130) de manière à présenter deux extrémités libres, l'anneau fendu (100) étant configuré pour se déformer en rapprochant les deux extrémités de l'anneau fendu (100) et donc d'être déformé dans un plan coplanaire à l'anneau fendu (100) et s'adapter audit élément d'affichage (210) de sorte à fixer l'élément d'affichage (210) audit au moins un mouvement (220).

2. Ensemble selon la revendication 1, dans lequel l'anneau comprend au moins une portion rigide (110) et au moins une portion de déformation (120) ; ladite au moins une portion de déformation (120) étant configurée pour être plus facilement déformable que ladite au moins une portion rigide.

3. Ensemble selon la revendication 1 ou 2, dans lequel l'anneau comprend un épaulement (101) ou une gorge (101) ; ledit épaulement (101) ou ladite gorge (101) forme un logement (102) configuré pour recevoir l'élément d'affichage. (210).

4. Dispositif de fixation (200) pour au moins un élément d'affichage (210) d'une montre, ledit dispositif de fixation (200) comprenant au moins un élément d'affichage (210), au moins un mouvement (220) et au moins un anneau fendu (100) selon l'une quelconque des revendications précédentes.

5. Procédé de fixation (500) pour au moins un élément d'affichage (210) d'une montre via ledit dispositif de fixation (200) selon la revendication 4, ledit procédé de fixation (500) comprenant au moins une étape de :
- Fourniture (510) dudit au moins un élément d'affichage (210), dudit au moins un mouvement (220) et dudit au moins un anneau fendu (100) ;
- Déformation (520) dans un plan coplanaire à l'anneau fendu (100) en rapprochant les deux extrémités dudit au moins un anneau fendu (100) de sorte à s'adapter audit au moins un élément d'affichage (210) ; et
- Fixation (530) dudit au moins un anneau fendu (100) audit au moins un mouvement (220).

6. Procédé de fixation (500) selon la revendication 5, dans lequel lors de l'étape de déformation (520) dudit au moins un anneau fendu (100), ledit au moins un élément d'affichage (210) est logé dans ledit logement (102) dudit épaulement (101) ou de ladite gorge (101).

7. Procédé de fixation (500) selon la revendication 5 ou 6, dans lequel, lors de l'étape de déformation (520), ledit au moins un anneau fendu (100) se déforme au niveau de ladite au moins une portion de déformation (520), de préférence lorsque les deux extrémités dudit au moins un anneau fendu (100) se rapprochent de part et d'autre de ladite discontinuité (130) ou de ladite ouverture (130).

## Patentansprüche

1. Anordnung umfassend ein Anzeigeelement (210) und einen Bügel (100) zum Befestigen des Anzeigeelements (210) einer Uhr, konfiguriert zum Anzeigen mindestens einer Information, an mindestens einem Uhrwerk (220) einer Uhr, wobei der Bügel (100) eine C-Form aufweist, die einen Kreisbogen definiert, und/oder eine Clipform mit einem Spalt oder einer Öffnung (130), sodass er zwei freie Enden aufweist, wobei der Bügel (100) so konfiguriert ist, dass er sich verformt, wenn die beiden Enden des Bügels (100) zusammengebracht werden, und somit in einer Ebene verformt wird, die koplanar zum Bügel (100) ist, und zum Anpassen an das Anzeigeelement (210), um das Anzeigeelement (210) an dem mindestens einen Uhrwerk (220) zu befestigen.

2. Anordnung nach Anspruch 1, wobei der Bogen mindestens einen starren Abschnitt (110) und mindestens einen Verformungsabschnitt (120) umfasst; wobei der mindestens eine Verformungsabschnitt (120) so konfiguriert ist, dass er leichter verformbar ist als der mindestens eine starre Abschnitt.

3. Anordnung nach Anspruch 1 oder 2, wobei der Bogen (100) eine Schulter (101) oder eine Nut (101) umfasst; wobei die Schulter (101) oder die Nut (101) ein Bett (102) bildet, das zum Aufnehmen des Anzeigeelements (210) konfiguriert ist.

4. Befestigungsvorrichtung (200) für mindestens ein Anzeigeelement (210) einer Uhr, wobei die Befestigungsvorrichtung (200) mindestens ein Anzeigeelement (210), mindestens ein Uhrwerk (220) und mindestens einen Bügel (100) nach einem der vorhergehenden Ansprüche umfasst.

5. Befestigungsverfahren (500) für mindestens ein Anzeigeelement (210) einer Uhr unter Verwendung der Befestigungsvorrichtung (200) nach Anspruch 4, wobei das Befestigungsverfahren (500) mindestens einen Schritt der folgenden Schritte umfasst:
- Bereitstellen (510) des mindestens einen Anzeigeelements (210), des mindestens einen Uhrwerks (220) und des mindestens einen Bogens (100);
- Verformen (520), in einer Ebene koplanar mit dem Bogen (100), durch Zusammenführen der beiden Enden des mindestens einen Bogens (100), derart, dass das mindestens eine Anzeigeelement (210) passt; und
- Befestigen (530) des mindestens einen Bogens (100) an dem mindestens einen Uhrwerk (220).

6. Befestigungsverfahren (500) nach Anspruch 5, wobei in dem Schritt des Verformens (520) des mindestens einen Bogens (100) das mindestens eine Anzeigeelement (210) in das Bett (102) der Schulter (101) oder der Nut (101) eingebettet ist.

7. Befestigungsverfahren (500) nach Anspruch 5 oder 6, wobei in dem Verformungsschritt (520) der mindestens eine Bügel (100) an dem mindestens einen Verformungsabschnitt (520) verformt wird, vorzugsweise indem die beiden Enden des mindestens einen Bügels (100) an beiden Seiten des Spalts (130) oder der Öffnung (130) zusammengeführt werden.

## Claims

1. An assembly comprising a display element (210) and a bow (100) for fastening the display element (210) of a watch, configured to display at least one item of information, to at least one movement (220) of a watch, said bow (100) having a C shape defining a circular arc and/or a clip shape with a gap or an opening (130) so as to have two free ends, the bow (100) being configured to distort as the two ends of the bow (100) are brought together and thus to be distorted in a plane that is coplanar with the bow (100) and to fit said display element (210) so as to fasten the display element (210) to said at least one movement (220).

2. The assembly according to claim 1, in which the bow comprises at least one rigid portion (110) and at least one distortion portion (120); said at least one distortion portion (120) being configured to be more easily distorted than said at least one rigid portion.

3. The assembly according to claim 1 or 2, in which the bow (100) comprises a shoulder (101) or a groove (101); said shoulder (101) or said groove (101) forms a bed (102) configured to receive said display element (210).

4. A fastening device (200) for at least one display element (210) of a watch, said fastening device (200) comprising at least one display element (210), at least one movement (220) and at least one bow (100) according to any of the preceding claims.

5. A fastening method (500) for at least one display element (210) of a watch using said fastening device (200) according to claim 4, said fastening method (500) comprising at least one step of:
- Providing (510) said at least one display element (210), said at least one movement (220) and said at least one bow (100);
- Distorting (520), in a plane coplanar with the bow (100), by bringing the two ends of said at least one bow (100) together so as to fit said at least one display element (210); and
- Fastening (530) said at least one bow (100) to said at least one movement (220).

6. The fastening method (500) according to claim 5, in which, in the step of distorting (520) said at least one bow (100), said at least one display element (210) is embedded in said bed (102) of said shoulder (101) or of said groove (101).

7. The fastening method (500) according to claim 5 or 6, in which, in the distortion step (520), said at least one bow (100) is distorted at said at least one distortion portion (520), preferably as the two ends of said at least one bow (100) are brought together on either side of said gap (130) or of said opening (130).
